# EUROPEAN PATENT SPECIFICATION

(11) **EP 3 763 582 B1**
(45) Date of publication and mention of the grant of the patent: **24.04.2024**
(21) Application number: 19763555.0
(22) Date of filing: 07.03.2019
(51) Int. Cl.: B60S 1/56

(54) **CLEANER-EQUIPPED SENSOR SYSTEM FOR VEHICLE**
SENSORSYSTEM MIT EINEM REINIGER FÜR EIN FAHRZEUG
SYSTÈME DE CAPTEUR ÉQUIPÉ D'UN NETTOYEUR POUR VÉHICULE

(30) Priority: 07.03.2018 JP 2018041039
(43) Date of publication of application: 13.01.2021
(73) Proprietor: KOITO MANUFACTURING CO., LTD., Minato-ku Tokyo 108-8711 (JP)
(72) Inventor: KUBOTA Akinobu, Shizuoka-shi, Shizuoka 424-8764 (JP); KAWAMURA Kazuki, Shizuoka-shi, Shizuoka 424-8764 (JP)
(74) Representative: Grünecker Patent- und Rechtsanwälte PartG mbB
(86) International application number: PCT/JP2019/009047
(87) International publication number: WO 2019/172364

(56) References cited:
- JP-A- 2001 171 491
- JP-A- 2007 053 448
- JP-A- 2012 132 988
- JP-A- 2014 073 826
- JP-A- 2016 179 767
- US-A1- 2006 038 668
- US-A1- 2012 117 745
- US-B2- 9 473 718

## Description

### TECHNICAL FIELD

The present invention relates to a cleaner-equipped sensor system for a vehicle.

### BACKGROUND ART

In recent years, the number of vehicles equipped with in-10 vehicle cameras that image situations around a vehicle is increasing. A lens of the in-vehicle camera, which is an imaging surface, may become dirty due to rain, mud and the like. Therefore, Patent Literature 1 discloses a cleaner for removing foreign substances by blowing a cleaning liquid, compressed air, and the like to a lens of an in-vehicle camera in order to remove foreign substances such as water droplets adhering to the lens.

For example, Patent Literature 1 proposes a configuration in which a compressed air generation unit is installed in a vicinity of the in-vehicle camera, compressed air of the compressed air generation unit is jetted from a nozzle, high-pressure air is blown to front glass of the in-vehicle camera, and thus water droplets adhering to the front glass are removed. US 9 473 718 B2 Also discloses a monitoring device for monitoring surroundings of a vehicle that is capable of detecting contaminants or dirt at a lens of a camera mounted on a moving body. A lens washing unit transmits an activation signal to a lens washing device that is capable of performing at least one of air blasting, washer fluid spraying, and wiper operation to activate it and have the lens surface washed. US 2012/117745 A1 discloses an on-board optical sensor apparatus including the on-board optical sensor cover and the optical sensor. There is also provided a washer nozzle 9 for cleaning camera 3.

### CITATION LIST

### PATENT LITERATURE

Patent Literature 1: JP-A-2001-171491

### SUMMARY OF INVENTION

### TECHNICAL PROBLEM

In Patent Literature 1, when a wiper is operated, an in-vehicle switch is operated at the same time to blow water or compressed air onto the front glass. Since an ECU (vehicle control unit) that controls an operation of the vehicle also controls an operation of the wiper, it is considered to be reasonable that the cleaner is also controlled by the vehicle control unit. However, it has been found that there is a room for improvement in the cleaner having such a configuration.

An object of the present invention is to provide a cleaner-equipped sensor system having a configuration different from that of Patent Literature 1.

### SOLUTION TO PROBLEM

In order to achieve the above object, a cleaner-equipped sensor system according to an aspect of the present invention includes:
A cleaner-equipped sensor system for a vehicle, comprising:
external sensors capable of acquiring information on an outside of a vehicle;
a cleaner unit including
- a liquid cleaner capable of discharging a cleaning liquid toward the external sensors, and
- a first and a second air cleaner, each capable of discharging air toward one of the external sensors respectively; and

an electronic processing device configured to output an output of the external sensors to a vehicle control unit controlling an operation of the vehicle, and to control the cleaner unit depending on an output of the vehicle control unit,
wherein the external sensors and the electronic processing device are attached to a common attachment member so as to be integrated, and
wherein a wiring connecting the external sensor and the electronic processing device is shorter than a wiring connecting the vehicle control unit and the electronic processing device.

According to the present invention, a cleaner-equipped sensor system having a configuration different from that of Patent Literature 1 is provided.

### BRIEF DESCRIPTION OF DRAWINGS

Fig. 1 is a perspective view showing a rear portion of a vehicle including a sensor system according to an embodiment of the present invention.
Fig. 2 is a front view showing the sensor system.
Fig. 3 is a top view showing the sensor system.
Fig. 4 is a schematic view showing an inside of a first air pump.
Fig. 5 is an exploded perspective view of a second air pump.
Fig. 6 is a block diagram of the sensor system.

### DESCRIPTION OF EMBODIMENTS

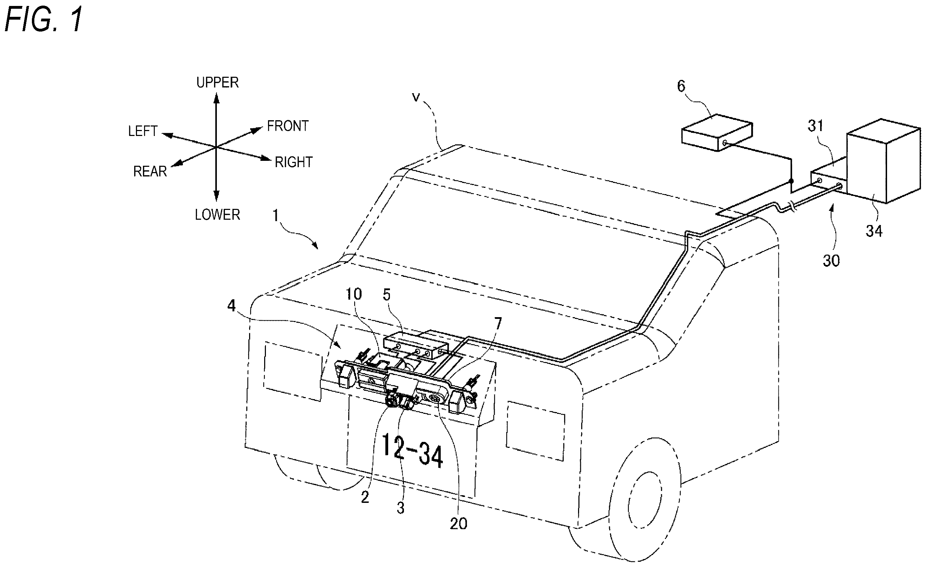

A cleaner-equipped sensor system 1 for a vehicle (hereinafter, simply referred to as a sensor system 1) according to an embodiment of the present invention will be described with reference to the drawings. Fig. 1 is a schematic view showing a vehicle V to which the sensor system 1 is attached. As illustrated in Fig. 1, the sensor system 1 of the present embodiment is applied to a configuration including a rear camera 2 (an example of external sensors 2, 3) and a back camera 3 (another example of the external sensors 2, 3) that acquire information of a rear of the vehicle V

As illustrated in Fig. 1, the sensor system 1 includes the rear camera 2, the back camera 3, a cleaner unit 4, and a sensor control unit 5.

The rear camera 2 always acquires an image of the rear of the vehicle V The rear camera 2 always acquires an image of the rear of the vehicle V at a relatively wide angle of view. For example, information output from the rear camera 2 can be used to confirm whether there is another vehicle attempting to overtake the host vehicle V from behind.

The back camera 3 acquires an image of the rear of the vehicle V when the vehicle V moves backward. The back camera 3 acquires information near the host vehicle V at the time of backward movement. For example, information output from the back camera 3 can be used to confirm whether there is an obstacle near the host vehicle V, such as when trying to park.

The cleaner unit 4 cleans a lens of the rear camera 2 and a lens of the back camera 3. The cleaner unit 4 includes a first air cleaner 10, a second air cleaner 20, and a liquid cleaner 30.

The first air cleaner 10 discharges high-pressure air to an object to be cleaned instantaneously or intermittently during operation. For example, the first air cleaner 10 can be used to remove dust adhering to the lens.

The second air cleaner 20 continuously discharges air to an object to be cleaned during operation. For example, the second air cleaner 20 may be configured to be continuously operated so that dust does not adhere to the lens.

The liquid cleaner 30 discharges a cleaning liquid to an object to be cleaned instantaneously or intermittently during operation. For example, the liquid cleaner 30 can be used to remove heavy dirt such as mud from the object to be cleaned.

The first air cleaner 10, the second air cleaner 20, and the liquid cleaner 30 can be operated in combination. For example, the second air cleaner 20 can be operated after the liquid cleaner 30 is operated.

The rear camera 2, the back camera 3, the first air cleaner 10, the second air cleaner 20, the nozzle of the liquid cleaner 30, and the sensor control unit 5 are attached to a common attachment member 7 so as to be integrated.

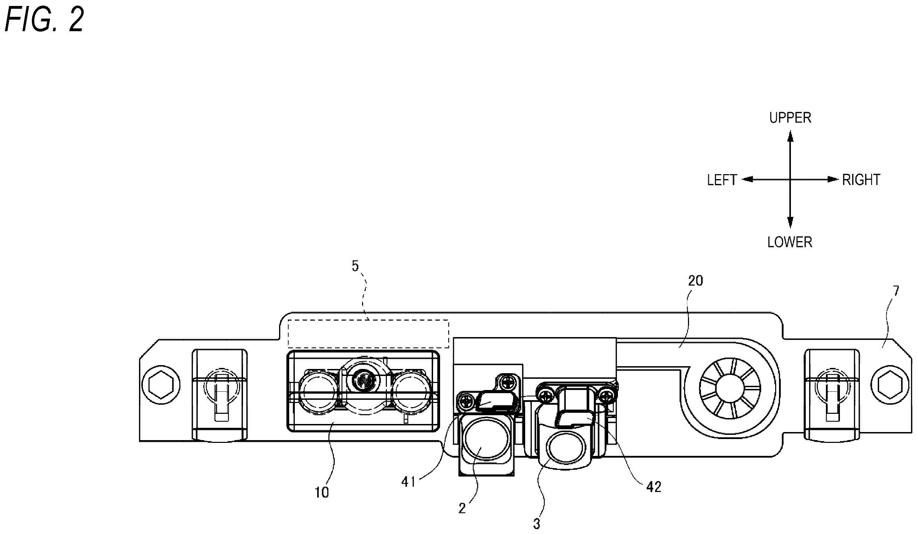

Fig. 2 is a front view of the attachment member 7 (a view as seen from a rear side of the vehicle to which the sensor system 1 is attached). As illustrated in Fig. 2, the lens of the rear camera 2 is exposed rearward. The lens of the back camera 3 is also exposed rearward. Nozzle portions 41, 42 are provided in an upper vicinity of the respective lens.

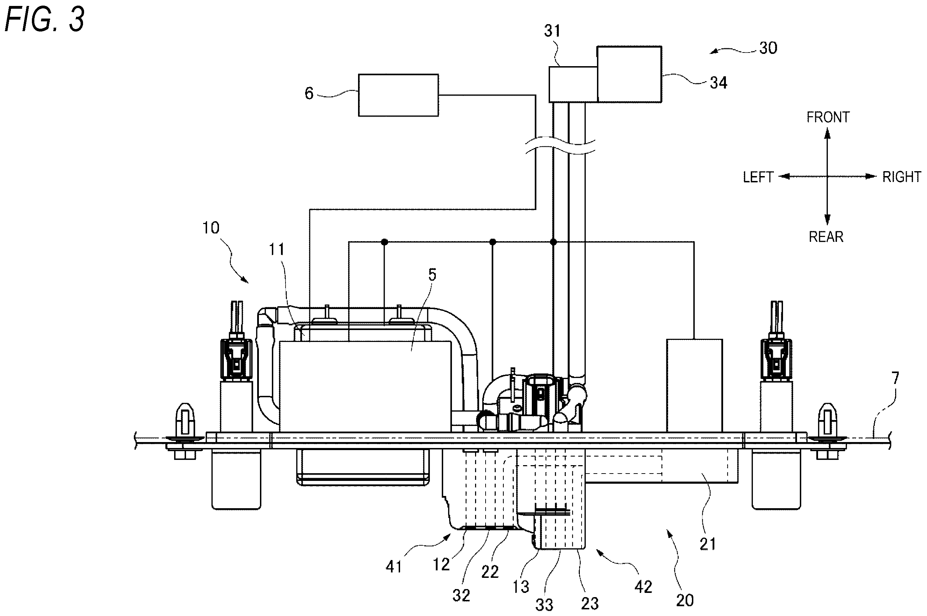

Fig. 3 is a schematic view of the attachment member 7 as seen from above (a schematic view as seen from above the vehicle V to which the sensor system 1 is attached). As illustrated in Fig. 3, the first air cleaner 10 includes a first high-pressure air generation unit 11, a first rear nozzle 12, a pipe line for guiding air from the first high-pressure air generation unit 11 to the first rear nozzle 12, a first back nozzle 13, and a pipe line for guiding air from the first high-pressure air generation unit 11 to the first back nozzle 13.

The second air cleaner 20 includes a second high-pressure air generation unit 21, a second rear nozzle 22, a pipe line for guiding air from the second high-pressure air generation unit 21 to the second rear nozzle 22, a second back nozzle 23, and a pipe line for guiding air from the second high-pressure air generation unit 21 to the second back nozzle 23. In the illustrated configuration, a part of the pipe line for guiding air from the second high-pressure air generation unit 21 to the second rear nozzle 22 and a part of the pipe line for guiding air from the second high-pressure air generation unit 21 to the second back nozzle 23 are made common.

The liquid cleaner 30 includes a third pump 31, a third rear nozzle 32, a pipe line for guiding air from the third pump 31 to the third rear nozzle 32, a third back nozzle 33, a pipe line for guiding air from the third pump 31 to the third back nozzle 33, and a tank 34 for storing the cleaning liquid. In the illustrated configuration, most of the pipe line for guiding air from the third pump 31 to the third rear nozzle 32 and most of the pipe line for guiding air from the third pump 31 to the third back nozzle 33 are made common.

The first rear nozzle 12, the second rear nozzle 22, and the third rear nozzle 32 are collectively accommodated in the rear nozzle portion 41. The first back nozzle 13, the second back nozzle 23, and the third back nozzle 33 are collectively accommodated in the back nozzle portion 42.

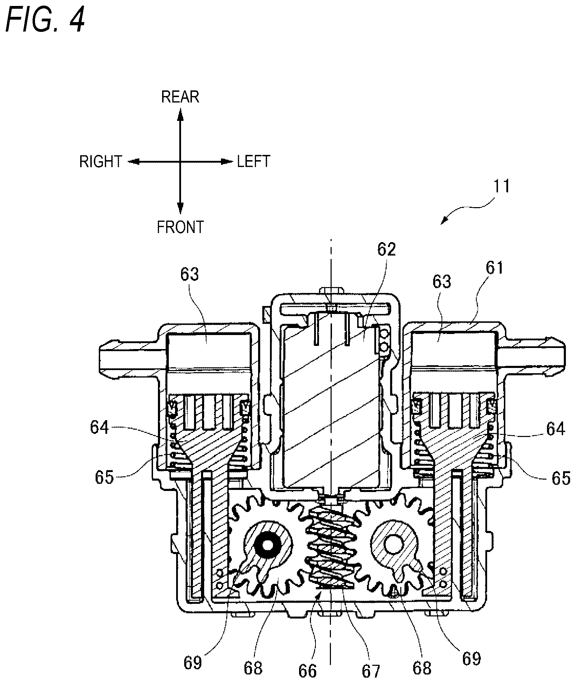

Fig. 4 is a schematic view showing an inside of the first high-pressure air generation unit 11.

The first high-pressure air generating unit 11 includes a first housing 61, a first motor 62, a pair of pump chambers 63, pistons 64 respectively provided in the pump chambers 63, biasing means 65 respectively provided on the pistons 64, and a power transmission mechanism 66. The biasing means 65 biases the piston 64 in a direction in which an internal volume of the pump chamber 63 reduces. The power transmission mechanism 66 is a mechanism for converting rotational motion of an output shaft of the first motor 62 into reciprocating motion of the piston 64. The power transmission mechanism 66 includes a worm gear 67 fixed to the output shaft, gears 68 that mesh with the worm gear 67, and intermittent gears 69 that rotates coaxially with the gears 68.

When the output shaft of the first motor 62 rotates, the power transmission mechanism 66 displaces the piston 64 in a direction in which the internal volume of the pump chamber 63 increases. At this time, the first motor 62 displaces the piston 64 in a direction opposite to a biasing force of the biasing means 65 against the biasing force. When a displacement amount of the piston 64 is constant, the intermittent gear 69 and the piston 64 are disengaged, and the power transmission mechanism 66 does not transmit power to the piston 64. Then, an elastic restoring force of the biasing means 65 acts on the piston 64, the piston 64 is displaced in a direction in which the internal volume of the pump chamber 63 is reduced vigorously, and high-pressure air is sent out from each pump chamber 63 to each pipe line.

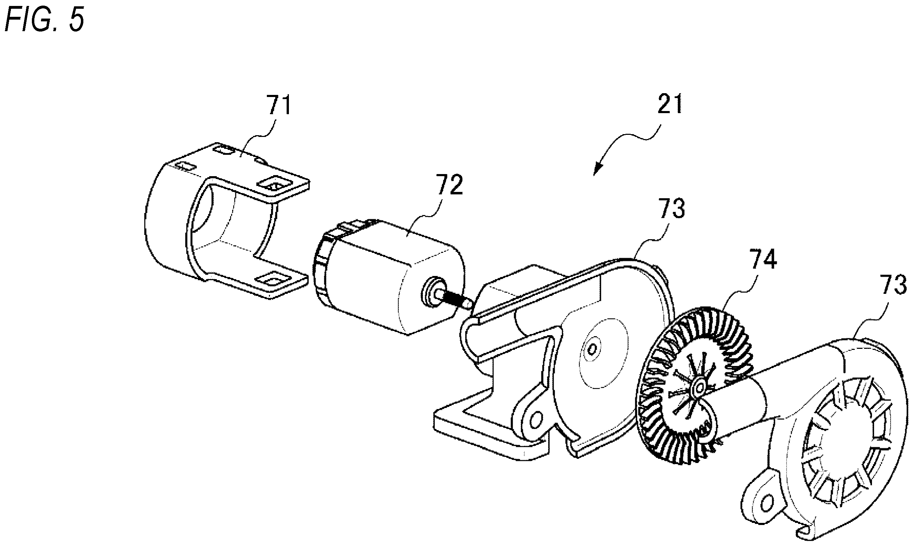

Fig. 5 is an exploded perspective view of a part of the second high-pressure air generation unit 21. As illustrated in Fig. 5, the high-pressure air generation unit 21 includes a motor case 71, a second motor 72, a second housing 73, and an impeller 74. The second air cleaner 20 is a so-called blower. The impeller 74 is rotatably provided inside the second housing 73. A pipe line is formed inside the second housing 73. The impeller 74 is fixed to an output shaft of the second motor 72. When the second motor 72 is driven, the impeller 74 rotates, and air sent by the impeller 74 is sent out to the pipe line inside the second housing 73.

Since a known cleaner for discharging a cleaning liquid can be used for the liquid cleaner 30, a detailed description thereof will be omitted. The third pump 31 pumps the cleaning liquid stored in the tank 34 to discharge the cleaning liquid from the third rear nozzle 32 and the third back nozzle 33.

With reference to Fig. 3 again, the sensor control unit 5 (electronic processing device) is fixed to the attachment member 7 together with the first high-pressure air generation unit 11, the first rear nozzle 12, the first back nozzle 13, the second high-pressure air generation unit 21, the second rear nozzle 22, the second back nozzle 23, the third rear nozzle 32, the third back nozzle 33, the rear camera 2, and the back camera 3, and the sensor control unit 5 is integrated with these members. In Fig. 1, the sensor control unit 5 is illustrated in a state where the sensor control unit 5 is detached from the attachment member 7 for easy understanding.

The first motor 62 of the first air cleaner 10, the second motor 72 of the second air cleaner 29, the third pump 31 of the liquid cleaner 30, an imaging element 2a of the rear camera 2, and an imaging element 3a of the back camera 3 are connected to the sensor control unit 5. The sensor control unit 5 is also connected to a vehicle control unit 6. The sensor control unit 5 outputs signals output from the rear camera 2 and the back camera 3 to the vehicle control unit 6. The sensor control unit 5 controls operations of the first motor 62 of the first air cleaner 10, the second motor 72 of the second air cleaner 20, and the third pump 31 of the liquid cleaner 30 depending on an output from the vehicle control unit 6.

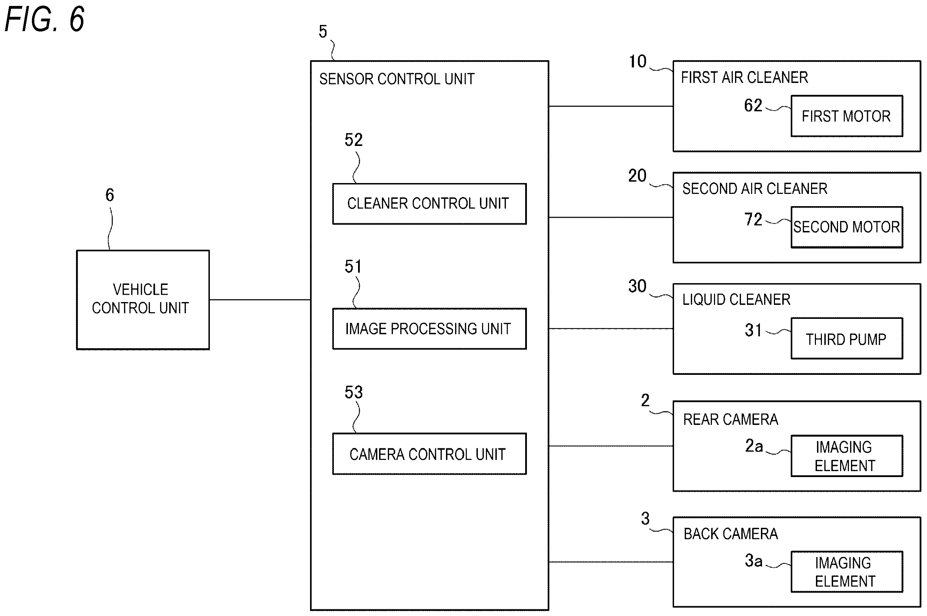

Fig. 6 is a block diagram of the cleaner-equipped sensor system 1 according to the present embodiment. As illustrated in Fig. 6, the sensor control unit 5 includes an image processing unit 51 and a cleaner control unit 52.

The image processing unit 51 outputs the outputs of the rear camera 2 and the back camera 3 to the vehicle control unit 6.

The outputs of the rear camera 2 and the back camera 3 are analog signals output from the imaging element 2a of the rear camera 2 and the imaging element 3a of the back camera 3, for example. The image processing unit 51 acquires the analog signals and converts the analog signals into digital signals, and outputs the digital signals to the vehicle control unit 6.

Alternatively, the outputs of the rear camera 2 and the back camera 3 are digital signals obtained by converting analog signals output from the imaging elements 2a, 3a by an A/D converter, for example. The image processing unit 51 acquires the digital signal (for example, raw data), converts the digital signal into a digital signal having a smaller data amount (for example, JPEG data or MPEG data), and outputs the digital signal to the vehicle control unit 6.

The cleaner control unit 52 controls the first motor 62, the second motor 72, and the third pump 31. The cleaner control unit 52 controls the first motor 62, the second motor 72, and the third pump 31 depending on a signal output from the vehicle control unit 6. For example, when a signal for causing the first air cleaner 10 to operate is input from the vehicle control unit 6, the cleaner control unit 52 supplies predetermined electric power to the first motor 62.

The cleaner control unit 52 may be configured to supply electric power to each motor, or may be configured to output a command value indicating the electric power to be supplied to each motor to an electronic circuit provided in a vicinity of the motor.

Alternatively, the image processing unit 51 and the cleaner control unit 52 may be configured to be able to detect whether or not dirt adheres to the cameras 2, 3 based on signals acquired from the rear camera 2 and the back camera 3 or signals subjected to image processing. For example, the image processing unit 51 or the cleaner control unit 52 can be configured to, when pixels in the same region output the same intensity signals for a certain period of time, determine that dirt is attached to a lens corresponding to the region.

The cleaner control unit 52 may be configured to control the first motor 62, the second motor 72, and the third pump 31 depending on a signal output from the image processing unit 51. For example, in a case where the image processing unit 51 is configured to be able to detect dirt of the rear camera 2 or the back camera 3 based on a signal subjected to image processing, when the image processing unit 51 detects dirt, the cleaner control unit 52 may be configured to supply predetermined electric power to the third pump 31 and further supply predetermined power to the first motor 62. Alternatively, an amount of electric power to be supplied to the third pump 31 may be calculated depending on a size of the dirt, and the amount of electric power may be supplied to the third pump 31.

Alternatively, the cleaner control unit 52 may be configured to change an operation mode of the cleaner unit 4 depending on a signal output from the vehicle control unit 6. For example, a mode in which the cleaning liquid is intermittently discharged three times and a mode in which the cleaning liquid is intermittently discharged five times may be switched depending on a vehicle speed output by the vehicle control unit 6.

The sensor control unit 5 may include a camera control unit 53. The camera control unit 53 controls the rear camera 2 and the back camera 3. For example, the camera control unit 53 changes a frame rate of the rear camera 2 depending on a signal representing a vehicle speed output from the vehicle control unit 6. Alternatively, the camera control unit 53 changes a shutter speed of the back camera 3 depending on a signal representing ambient brightness output from the vehicle control unit 6.

The sensor control unit 5 may be configured with a single electronic circuit. Alternatively, an electronic circuit functioning as the cleaner control unit 52 and an electronic circuit functioning as the image processing unit 51 may be accommodated in a common casing. Alternatively, the electronic circuits respectively functioning as the cleaner control unit 52 and the image processing unit 51 may be mounted on a common substrate.

With the sensor system 1 according to the present embodiment, the sensor control unit 5 that outputs the outputs of the external sensors 2, 3 to the vehicle control unit 6 and controls the cleaner unit 4 depending on the output of the vehicle control unit 6 is integrated with the external sensors 2, 3. The cleaner unit 4 that cleans the external sensors 2, 3 and the external sensors 2, 3 are provided at positions close to each other. As in the present embodiment, when the sensor control unit 5 that controls the cleaner unit 4 is integrated with the external sensors 2, 3, the external sensors 2, 3 and the sensor control unit 5 are also provided at positions close to each other, so that a wiring between the cleaner unit 4 and the sensor control unit 5 is also likely to be shortened. In the present embodiment, at least a wiring between the first motor 62 and the sensor control unit 5 can be set to be shorter than a wiring between the vehicle control unit 6 and the sensor control unit 5. A wiring between the second motor 72 and the sensor control unit 5 can be set to be shorter than the wiring between the vehicle control unit 6 and the sensor control unit 5.

Unlike the present embodiment, in a case where the vehicle control unit controls the cleaner unit, it is necessary to provide wirings between the vehicle control unit and the respective cleaner units, and a total length of all the wirings increases. As compared to such a configuration, according to the sensor system 1 of the present embodiment, the total length of all the wirings is likely to be shortened.

Further, unlike the present embodiment, in a case where electronic circuits functioning as the cleaner control unit and the image processing unit are provided in a distributed manner, the respective electronic circuits may be protected by waterproof covers, and a size of the entire sensor system is likely to increase. However, according to the present embodiment, since the electronic circuits functioning as the cleaner control unit 52, the image processing unit 51, and the camera control unit 53 are collectively configured as the sensor control unit 5, the size of the entire sensor system 1 is less likely to increase even if the sensor control unit 5 is protected by a waterproof cover.

In the embodiment described above, an example in which the rear camera and the back camera are applied as external sensors has been described, but the present invention is not limited thereto. For example, as external sensors, a front camera that acquires information of the front of the host vehicle, a right camera that acquires information of a right side of the host vehicle, a left camera that acquires information of a left side of the host vehicle, a front LiDAR that acquires information of the front of the host vehicle, a right LiDAR that acquires information of the right side of the host vehicle, a left LiDAR that acquires information of the left side of the host vehicle, a rear LiDAR that acquires information of the rear of the host vehicle, a front radar that acquires information of the front of the host vehicle, a right radar that acquires information of the right side of the host vehicle, a left radar that acquires information of the left side of the host vehicle, a rear radar that acquires information of the rear of the host vehicle, and the like can be applied.

The LiDAR is generally a sensor that emits non-visible light forward and acquires information such as a distance to an object, a shape of an object, a material of an object, and the like based on the emitted light and return light. The LiDAR generally includes a light emitting unit that emits infrared rays or near-infrared rays, a light receiving unit that receives the light, a filter through which only infrared rays or near-infrared rays pass, a transparent cover through which light passes, and a housing that houses these parts. The LiDAR may include another lens and a cover for protecting the lens. In some cases, the transparent cover, the filter, the lens, and the like are integrated.

In the embodiment described above, an example in which the cleaner unit cleans the lens of the camera has been described, but the cleaner unit may be configured to clean the transparent cover, the filter, or the like.

The sensor system may include two or more external sensors having different operating principles, such as a front camera and a front LiDAR.

The sensor system includes both a rear air cleaner configured to send air only to the rear camera and not to the back camera and a back air cleaner configured to send air only to the back camera and not to the rear camera.

In the embodiment described above, an example in which a volumetric first air cleaner is adopted and a non-volumetric blower is adopted as the second air cleaner has been described, but the present invention is not limited thereto. As the air cleaner, a known pump, a compressor, or a blower having a configuration other than the configuration of the embodiment described above can be adopted. In the embodiment described above, an example in which the sensor system includes two air cleaners has been described, but the present invention is not limited thereto. The sensor system may include three or more air cleaners.

The present application is based on a Japanese Patent Application No. 2018-041039 filed on March 7, 2018.

### INDUSTRIAL APPLICABILITY

According to the present invention, a cleaner-equipped sensor system having a configuration different from that of Patent Literature 1 is provided.

### REFERENCE SIGNS LIST

- 1: cleaner-equipped sensor system
- 2: rear camera (external sensor)
- 2a, 3a: imaging element
- 3: back camera (external sensor)
- 4: cleaner unit
- 5: sensor control unit (electronic processing device)
- 6: vehicle control unit
- 7: attachment member
- 10: first air cleaner
- 11: first high-pressure air generation unit
- 12: first rear nozzle
- 13: first back nozzle
- 20: second air cleaner
- 21: second high-pressure air generation unit
- 22: second rear nozzle
- 23: second back nozzle
- 30: liquid cleaner
- 31: third pump
- 32: third rear nozzle
- 33: third back nozzle
- 34: tank
- 41: rear nozzle portion
- 42: back nozzle portion
- 51: image processing unit
- 52: cleaner control unit
- 53: camera control unit
- 61: first housing
- 62: first motor
- 63: pump chamber
- 64: piston
- 65: biasing means
- 66: power transmission mechanism
- 67: worm gear
- 68: gear
- 69: intermittent gear
- 71: motor case
- 72: second motor
- 73: second housing
- 74: impeller
- V: vehicle

## Claims

1. A cleaner-equipped sensor system (1) for a vehicle (V), comprising:
external sensors (2, 3) capable of acquiring information on an outside of a vehicle (V);
a cleaner unit (4) including a liquid cleaner (30) capable of discharging a cleaning liquid toward the external sensors (2, 3), and a first and a second air cleaner (10, 20), each capable of discharging air toward one of the external sensors (2, 3) respectively; and
an electronic processing device (5) configured to output an output of the external sensors (2, 3) to a vehicle control unit (6) controlling an operation of the vehicle (V), and to control the cleaner unit (4) depending on an output of the vehicle control unit (6), wherein
the external sensors (2, 3) and the electronic processing device (5) are attached to a common attachment member (7) so as to be integrated, and
wherein a wiring connecting the external sensor (2, 3) and the electronic processing device (5) is shorter than a wiring connecting the vehicle control unit (6) and the electronic processing device (5).

2. The cleaner-equipped sensor system (1) according to claim 1, wherein
the electronic processing device (5) is configured to operate the air cleaner (10, 20) after operating the liquid cleaner (30).

3. The cleaner-equipped sensor system (1) according to claim 1, wherein
the electronic processing device (5) is configured to operate the cleaner unit (4) depending on an output of the vehicle control unit (6).

4. The cleaner-equipped sensor system (1) according to claim 1, wherein
the electronic processing device (5) is configured to change an operation mode of the cleaner unit (4) depending on an output of the vehicle control unit (6).

5. The cleaner-equipped sensor system (1) according to claim 1, wherein
at least a part of the cleaner unit (4) is integrated with the external sensors (2, 3) and the electronic processing device (5).

## Patentansprüche

1. Mit einem Reiniger ausgestattetes Sensorsystem (1) für ein Fahrzeug (V), umfassend:
externe Sensoren (2, 3), die Informationen außen an einem Fahrzeug (V) erfassen können,
eine Reinigereinheit (4), die einen Flüssigreiniger (30), der eine Reinigungsflüssigkeit zu den externen Sensoren (2, 3) ausgeben kann, und erste und zweite Luftreiniger (10, 20), die jeweils Luft zu einem der externen Sensoren (2, 3) ausgeben können, umfasst, und
eine elektronische Verarbeitungseinrichtung (5), die konfiguriert ist zum Ausgeben einer Ausgabe der externen Sensoren (2, 3) zu einer Fahrzeugsteuereinheit (6), die einen Betrieb des Fahrzeugs (V) steuert, und zum Steuern der Reinigereinheit (4) in Abhängigkeit von einer Ausgabe der Fahrzeugsteuereinheit (6),
wobei die externen Sensoren (2, 3) und die elektronische Verarbeitungseinrichtung (5) an einem gemeinsamen Befestigungsglied (7) befestigt sind und dadurch integriert sind, und
wobei eine die externen Sensoren (2, 3) und die elektronische Verarbeitungseinrichtung (5) verbindende Verdrahtung kürzer als eine die Fahrzeugsteuereinheit (6) und die elektronische Verarbeitungseinrichtung (5) verbindende Verdrahtung ist.

2. Mit einem Reiniger ausgestattetes Sensorsystem (1) nach Anspruch 1, wobei:
die elektronische Verarbeitungseinrichtung (5) konfiguriert ist zum Betreiben des Luftreinigers (10, 20) nach dem Betreiben des Flüssigreinigers (30).

3. Mit einem Reiniger ausgestattetes Sensorsystem (1) nach Anspruch 1, wobei:
die elektronische Verarbeitungseinrichtung (5) konfiguriert ist zum Betreiben der Reinigereinheit (4) in Abhängigkeit von einer Ausgabe der Fahrzeugsteuereinheit (6).

4. Mit einem Reiniger ausgestattetes Sensorsystem (1) nach Anspruch 1, wobei:
die elektronische Verarbeitungseinrichtung (5) konfiguriert ist zum Wechseln des Betriebsmodus der Reinigereinheit (4) in Abhängigkeit von einer Ausgabe der Fahrzeugsteuereinheit (6).

5. Mit einem Reiniger ausgestattetes Sensorsystem (1) nach Anspruch 1, wobei:
wenigstens ein Teil der Reinigereinheit (4) mit den externen Sensoren (2, 3) und der elektronischen Verarbeitungseinrichtung (5) integriert ist.

## Revendications

1. Système de capteur équipé d'un nettoyeur (1) pour un véhicule (V), comprenant :
des capteurs externes (2, 3) capables d'acquérir des informations sur un extérieur d'un véhicule (V) ;
une unité de nettoyeur (4) incluant un nettoyeur à liquide (30) capable de décharger un liquide de nettoyage vers les capteurs extérieurs (2, 3), et un premier et un deuxième nettoyeurs à air (10, 20), chacun capable de décharger de l'air vers un des capteurs externes (2, 3) respectivement ; et
un dispositif de traitement électronique (5) configuré pour produire une sortie des capteurs externes (2, 3) vers une unité de commande de véhicule (6) contrôlant un fonctionnement du véhicule (V), et pour commander l'unité de nettoyeur (4) selon une sortie de l'unité de commande de véhicule (6), dans lequel
les capteurs externes (2, 3) et le dispositif de traitement électronique (5) sont fixés à un élément de fixation commun (7) de sorte à être intégrés, et
dans lequel un câblage connectant le capteur externe (2, 3) et le dispositif de traitement électronique (5) est plus court qu'un câblage connectant l'unité de commande de véhicule (6) et le dispositif de traitement électronique (5).

2. Le système de capteur équipé d'un nettoyeur (1) selon la revendication 1, dans lequel
le dispositif de traitement électronique (5) est configuré pour faire fonctionner le nettoyeur à air (10, 20) après fonctionnement du nettoyeur à liquide (30).

3. Le système de capteur équipé d'un nettoyeur (1) selon la revendication 1, dans lequel
le dispositif de traitement électronique (5) est configuré pour faire fonctionner l'unité de nettoyeur (4) selon une sortie de l'unité de commande de véhicule (6) .

4. Le système de capteur équipé d'un nettoyeur (1) selon la revendication 1, dans lequel
le dispositif de traitement électronique (5) est configuré pour changer un mode de fonctionnement de l'unité de nettoyeur (4) selon une sortie de l'unité de commande de véhicule (6).

5. Le système de capteur équipé d'un nettoyeur (1) selon la revendication 1, dans lequel
au moins une partie de l'unité de nettoyeur (4) est intégrée à des capteurs externes (2, 3) et au dispositif de traitement électronique (5).
